# EUROPÄISCHE PATENTSCHRIFT

(11) **EP 2 384 717 B1**
(45) Veröffentlichungstag und Bekanntmachung des Hinweises auf die Patenterteilung: **11.07.2018**
(21) Anmeldenummer: 10162232.2
(22) Anmeldetag: 07.05.2010
(51) Int. Cl.: A61C 7/08

(54) **Vorrichtung zur kieferorthopädischen Zahnkorrektur und Verfahren zu ihrer Herstellung**
Device for orthodontic dental correction and method for producing the same
Dispositif de correction dentaire orthodontique et son procédé de fabrication

(43) Veröffentlichungstag der Anmeldung: 09.11.2011
(73) Patentinhaber: Ifert, Falk, 36448 Schweina (DE)
(72) Erfinder: Ifert, Falk, 36448 Schweina (DE)
(74) Vertreter: Rupprecht, Kay

(56) Entgegenhaltungen:
- WO-A1-95/27536
- WO-A2-2007/021468
- US-A1- 2009 098 500

## Beschreibung

Die Erfindung betrifft eine Vorrichtung zur kieferorthopädischen Zahnkorrektur, insbesondere zum Erzeugen einer körperlichen Zahnbewegung an wenigstens einem Zahn, nach dem Oberbegriff des Patentanspruchs 1. Zudem betrifft die Erfindung ein Verfahren zur Herstellung einer solchen Vorrichtung.

Aus dem Stand der Technik sind derartige Vorrichtungen zur kieferorthopädischen Zahnkorrektur in mehreren Ausführungsformen bekannt.

Aus der DE 199 53 827 B4 ist ein abnehmbares Grundplattenregulierungsgerät bekannt mittels dem Zähne, Zahnreihen und der Kieferknochen reguliert werden können. Vorgesehen dazu ist ein Klemmapparat oder eine Klammer, die an einem abnehmbaren bzw. demontierbaren Plattenteil angebracht ist. Dieses abnehmbare bzw. demontierbare Plattenteil besteht aus Kunstharz und dient als Halteelemente zum Festhalten der Apparatur an den Zähnen. Weiterhin kann sich der Angriffspunkt bzw. eine Montierbasis der Einrichtung, für beispielsweise druckausübende Muttern und Schrauben, zum Zusammenziehen oder Auseinanderdrücken an diesem Plattenteil befinden.

Diese aktiven Elemente bzw. Bewegungselemente, die beim Einsetzen der Apparatur aktiviert werden, sind dafür zuständig, Kräfte, insbesondere Drücke oder Drehmomente auf die Zähne aufzubringen, um diese wie gewünscht zu bewegen.

Der Nachteil dieser herausnehmbaren kieferorthopädischen Apparaturen liegt jedoch darin, dass es nicht möglich ist, gezielte körperliche Zahnbewegungen durchzuführen und die Bewegung von Zähnen, Zahnreihen oder Kieferknochen exakt zu kontrollieren. Auch ist die Erzeugung größerer körperlicher Zahnbewegungen nicht möglich; mit einer solchen Apparatur können lediglich kleine Fehlstellungen der Zähne korrigiert, vor allem aber die Zähne nach einer bereits anderweitig erzeugten körperlichen Zahnbewegung fixiert und bis zur endgültigen Festigung stabilisiert werden.

Darüber hinaus offenbart die Druckschrift US 2009 / 0 098 500 A1 eine kieferorthopädische Vorrichtung mit einer Hülse, die die Zähne bedeckt, wobei ein längliches Element aus einem flexiblen Material mit einem Ende an der Hülse befestigt ist und ein anderes Ende des länglichen Elements frei ist. Des Weiteren zeigt die Druckschrift WO 95 / 27 536 A1 eine zahntechnische Vorrichtung, die in eine Mundhöhle zwischen die Zahnbögen eingebracht werden kann, wobei verformbare Polsterelemente mittels eines Drahtes verbunden sind.

Weiterhin sind aus der EP 1 505 921 B1 festsitzende kieferorthopädische Apparaturen bekannt, um einzelne Zähne bzw. Zahnsegmente in allen Dimensionen des Raumes relativ zueinander zu bewegen bzw. deren Stellung zu kontrollieren und vor allem auch körperliche Zahnbewegungen zu gewährleisten. Diese festsitzenden kieferorthopädischen Apparaturen sind auch als Multibracket- oder Multiband-Apparaturen bekannt.

Hauptbestandteil der festsitzenden kieferorthopädischen Apparaturen sind Brackets bzw. Verankerungsglieder für einen Bogen, die an den einzelnen Zähnen festgeklebt bzw. über Bänder fest zementiert werden. Die Brackets dienen als eine Art Haltegriff und erlauben die Übertragung von Kräften und Drehmomenten auf die einzelnen Zähne. Die zur körperlichen Bewegung der Zähne notwendigen Drücke und Drehmomente werden normalerweise über einen Bogen, beispielsweise einen bogenförmigen Metalldraht von rundem oder vierkantigem Querschnitt, auf die Brackets aufgebracht, in dem der Bogen in eine Führungsrille im Bracket eingeführt wird. Durch Verbiegen des Bogens ist es möglich, einen unterschiedlichen Verlauf des Bogens zu erzielen und so gezielt an unterschiedlichen Stellen größere und kleinere Kräfte in die Zähne einzuleiten. Weiterhin können Kräfte über ein Gummiband, -federn, -ketten oder intermaxilläre Verbindungseinheiten aufgebracht werden, die an bevorzugt hakenförmigen Festlegungen am Bracket angreifen und sich bevorzugt zwischen der am Oberkiefer befestigten Teile der kieferorthopädischen Vorrichtung zu dem am Unterkiefer befestigten Teil der kieferorthopädischen Vorrichtung erstrecken. Auch können Kräfte über einen Gesichtsbogen bzw. ähnliche extraorale Hilfsmittel aufgebracht werden, die an einem bevorzugt rohrförmigen Ansatz des Brackets angreifen.

Um eine effiziente Bewegung der Zähne zu erzielen, kommt es darauf an, dass die auf die Zähne wirkenden Kräfte richtig dimensioniert sind und eine über den Behandlungszeitraum gesehen kontinuierliche Wirkung entfalten können. Der behandelnde Zahnarzt erhält alle Kontrollmöglichkeiten für die Zahnbewegung durch die Anordnung der Draht- und Kraftelemente. Insofern stellen derzeit diese festsitzenden Vorrichtungen die einzige Möglichkeit dar, effektiv körperliche Zahnbewegungen zu Erzeugen. Alle anderen Vorrichtungen ermöglichen wenn überhaupt nur geringe Korrekturen bzw. eine vorübergehende Stabilisierung.

Der Nachteil dieser festsitzenden kieferorthopädischen Apparaturen liegt jedoch darin, dass sie permanent getragen werden müssen und nur von einem versierten zahnärztlichen Behandler mit großem Zeitaufwand in den Patientenmund eingesetzt bzw. eingegliedert werden können.

Der Patient kann also diese Apparatur nicht selbst entfernen oder wieder einsetzen. Dadurch sind alle oralen Funktionen wie Essen, Sprechen oder ähnliches sowie Zahnpflege, Ästhetik und soziale Interaktionen eingeschränkt oder sehr erschwert.
Der Erfindung liegt daher die Aufgabe zugrunde, eine Vorrichtung zur kieferorthopädischen Zahnkorrektur derart zu gestalten, dass die kieferorthopädische Apparatur aus dem Mundraum herausnehmbar ist, jedoch insbesondere sogenannte körperliche Zahnbewegungen ermöglicht, und ein Verfahren zur Herstellung einer solchen Vorrichtung aufzuzeigen.

Diese Aufgabe wir durch eine Vorrichtung nach Patentanspruch 1 bzw. ein Verfahren nach Patentanspruch 10 gelöst.

Insbesondere wird die Aufgabe durch eine Vorrichtung zur kieferorthopädischen Zahnkorrektur, insbesondere zum Erzeugen einer körperlichen Zahnbewegung an wenigstens einem Zahn, gelöst, mit wenigstens einem Verbindungselement zur kraftschlüssigen Verbindung wenigstens zweier Zähne, wobei das Verbindungselement über Befestigungselemente der Vorrichtung mit den wenigstens zwei Zähnen in Wirkverbindung steht oder bringbar ist, und mit wenigstens einem Kraftelement, das mit dem Verbindungselement in Wirkverbindung steht oder bringbar ist, zum Einwirken einer Positionierkraft auf den wenigstens einen zu bewegenden Zahn, wobei die Befestigungselemente wenigstens teilweise als Formschlusskappe ausgeführt sind, die kraftschlüssig über wenigstens einen Zahn überstülpbar ist, und wobei das Verbindungselement mit dem Befestigungselement über wenigstens ein Montageelement verbindbar ist, so dass das wenigstens eine Verbindungselement austauschbar und an unterschiedliche Zahnstellungen adaptierbar ist.

Ein wesentlicher Punkt der Erfindung liegt darin, dass die Bewerkstelligung von exakt vorhersagbaren, insbesondere körperlichen Zahnbewegungen durch aus dem Mundraum herausnehmbare kieferorthopädische Apparaturen gewährleistet werden kann. Dadurch, dass das Verbindungselement wenigstens zwei Zähne kraftschlüssig miteinander verbindet und über Befestigungselemente mit den Zähnen in Wirkverbindung steht oder mit den Zähnen in Wirkverbindung bringbar ist, kann das Kraftelement direkt Kräfte auf den wenigstens einen zu bewegenden Zahn übertragen.

Das Einleiten der Positionierkraft erfolgt bevorzugt über die Befestigungselemente, die wenigstens teilweise als Formschlusskappen ausgebildet sind und kraftschlüssig über wenigstens einen Zahn übergestülpt werden können. Die Befestigungselemente werden formschlüssig an den Zähnen durch Unterschnitte gehalten. Falls die natürlichen Unterschnitte nicht ausreichen, werden im erforderlichen Umfang künstliche Unterschnitte auf den Zähnen erzeugt. Dies erfolgt vorzugsweise mit Retentionen aus zahnärztlichem Füllungsmaterial, wie beispielsweise Wülsten, Kugeln etc..

Durch die hier beschriebene Kombination der sonst nur bei festsitzenden kieferorthopädischen Apparaturen vorhandenen Behandlungsmöglichkeiten mit den Vorteilen von herausnehmbaren kieferorthopädischen Apparaturen wird dem behandelnden Zahnarzt somit die Möglichkeit einer erleichterten Behandlung und Handhabung gegeben. Dieser hat alle Kontrollmöglichkeiten für die insbesondere körperliche Zahnbewegung, die sonst nur bei festsitzenden kieferorthopädischen Apparaturen möglich waren.

Vorzugsweise ist die Vorrichtung lösbar mit den Zähnen in Wirkverbindung bringbar. Hiermit können die oben genannten Nachteile von festsitzenden kieferorthopädischen Apparaturen, wie beispielsweise die Einschränkung oder Erschwerung aller oralen Funktionen wie Essen, Sprechen oder ähnliches sowie Zahnpflege, Ästhetik und soziale Interaktionen, umgangen werden, da eine eigenständige Ein- und Ausgliederung der Vorrichtung durch den Patienten möglich ist. Für eine biologisch wirksame Einwirkung reichen als Tragezeit 8 Stunden pro Tag aus. Die Durchführung der Behandlung wird somit für den behandelnden Zahnarzt sowie für den Patienten erleichtert.

Vorzugsweise ist die Formschlusskappe als Teil einer Segmentierung einer formschlüssigen Miniplastschiene bzw. Aufbissschiene ausgebildet. Diese Miniplastschiene wird formschlüssig, von den Zähnen lösbar, mittels kieferorthopädischem Abformens eines Gebissmodels wenigstens zweier Zähne hergestellt. Hierfür wird bevorzugt das Tiefziehen einer Folie aus Kunststoff verwendet. Anschließend wird die Miniplastschiene in Formschlusskappen zerteilt.

Vorzugsweise sind wenigstens zwei Formschlusskappen vorgesehen, wobei wenigstens eine Formschlusskappe als Lagerformschlusskappe und wenigstens eine weitere Formschlusskappe als Kraftelementformschlusskappe zur Erzeugung der körperlichen Zahnbewegung des zu bewegenden Zahnes ausgebildet ist. Je nach dem, für welche Zähne eine Zahnkorrektur gewünscht wird, erfolgt die Segmentierung in wenigstens zwei Lagerformschlusskappen, die als Lagerung der Vorrichtung dienen, und wenigstens eine Kraftelementformschlusskappe für den wenigstens einen zu bewegenden Zahn. Grundsätzlich kann bei einer entsprechend ausgebildeten Vorrichtung die Kraftelementformschlusskappe relativ zur Lagerformschlusskappe bewegt werden, um eine körperliche Zahnbewegung in den entsprechenden Zahn einzuleiten.

Vorzugsweise ist die Lagerformschlusskappe derart ausgebildet, dass sie über wenigstens zwei Zähne und insbesondere über mehr Zähne überstülpbar ist als die Kraftelementformschlusskappe. Die Lagerformschlusskappen dienen zur Stabilisierung der Vorrichtung an den Zähnen und als Halt für die Kraftelementformschlusskappe, um diese und insbesondere den wenigstens einen zu bewegenden Zahn in die richtige und gewünschte Position zu bringen und so die körperliche Zahnbewegung zu erzeugen. Die obige Ausbildung garantiert dabei, dass die aus der Krafteinleitung in den zu bewegenden Zahn resultierenden Reaktionsbewegungen im Bereich der Lagerformschlusskappen reduziert wird bzw. vernachlässigbar ist.

Vorzugsweise sind die Verbindungselemente als Kraftelemente und insbesondere derart vorspannbar ausgebildet, um über die Befestigungselemente eine Rückstellkraft auf den wenigstens einen körperlich zu bewegenden Zahn zu übertragen. Auf diese Weise reduzieren sich die Größe und der Herstellungspreis der Vorrichtung deutlich. Die gewünschte Zahnkorrektur kann so zudem, bei Einhaltung der benötigten Tragezeit pro Tag, erreicht werden.

Vorzugsweise ist das Verbindungselement als Drahtelement oder eines dergleichen elastisch verformbares Element ausgebildet. Diese Bogenelemente können Kräfte generieren und werden je nach gewünschter Zahnbewegung und der hierfür erforderlichen Kraft in die Montageelemente eingeführt bzw. befestigt. Dazu werden die elastischen Bögen reversibel verformt. Durch die in den elastischen Bögen wirkende Rückstellkraft werden auf den wenigstens einen zu bewegenden Zahn Kräfte übertragen. Dies wird durch die Befestigungselemente und den Formschluss zwischen Kraftelementformschlusskappe und dem wenigstens einen zu bewegenden Zahn gewährleistet. Als Resultat dieser Krafteinwirkung ist der Umbau des Zahnfaches mit der gewünschten Zahnbewegung.

Vorzugsweise umfasst das Kraftelement wenigstens ein Stellelement, insbesondere ein Schraubenelement, wobei das Stellelement eine Anpassung der wenigstens in den körperlich zu bewegenden Zahn eingeleiteten Kraft ermöglicht. Beispielsweise werden Teilbögen, Federn, Schrauben dergleichen Elemente verwendet, um resultierende Kräfte und somit die resultierende Bewegung anzupassen.

Die Erfindung betrifft neben der obigen Vorrichtung auch ein Verfahren zur Herstellung der Vorrichtung. Das Verfahren zur Herstellung dieser Vorrichtung zur kieferorthopädischen Zahnkorrektur, insbesondere zum Erzeugen einer körperlichen Zahnbewegung an wenigstens einem Zahn, umfasst folgende Verfahrensschritte: Herstellen einer formschlüssigen, von den Zähnen lösbar ausgebildeten Befestigungsschiene, insbesondere Miniplastschiene, die über die Zähne überstülpar ausgebildet ist; Segmentieren der Befestigungsschiene, sodass sich wenigstens eine Lagerformschlusskappe und wenigstens eine zu bewegende Kraftelementformschlusskappe ergeben; Aufbringen je wenigstens eines Montageelements auf die Lagerformschlusskappe und die Kraftelementformschlusskappe; kraftschlüssiges Verbinden der Lagerformschlusskappe und der Kraftelementformschlusskappe mittels wenigstens eines Verbindungselementes über die Montageelemente, und Anordnen wenigstens eines Kraftelementes derart, dass dieses wenigstens mit der Kraftelementformschlusskappe in Wirkverbindung steht oder bringbar ist, um eine Positionierkraft in die Kraftelementformschlusskappe einzuleiten.

Im Umfang dieses Verfahrens sind sämtliche bereits zur erfindungsgemäßen Vorrichtung erwähnten Merkmale anwendbar. Aus Redundanzgründen wird hier auf eine eigenständige Auflistung verzichtet, sondern auf obige Passagen verwiesen.

Weitere Ausführungsformen der Erfindung ergeben sich aus den Unteransprüchen.

Nachfolgend wird die Erfindung anhand von Ausführungsbeispielen beschrieben, die in Bezugnahme auf die Abbildungen näher erläutert werden. Hierbei zeigen:
Fig. 1 eine formschlüssige Befestigungsschiene, insbesondere Miniplastschiene, auf einem kieferorthopädischen Modell;
Fig. 2 die den gewünschten Zahnbewegungen entsprechend segmentierte, formschlüssige Befestigungsschiene gemäß Fig. 1;
Fig. 3 eine Vorrichtung zur kieferorthopädischen Zahnkorrektur im gebrauchsfertigen Zustand unter Verwendung der Befestigungsschiene gemäß Fig. 2 in einer Frontansicht auf dem kieferorthopädischen Modell gemäß Fig. 1;
Fig. 4 die Vorrichtung zur kieferorthopädischen Zahnkorrektur gemäß Fig. 3 in einer Seitenansicht; und
Fig. 5 die Vorrichtung zur kieferorthopädischen Zahnkorrektur gemäß Fig. 4 in einer Draufsicht.

In der nachfolgenden Beschreibung werden für gleiche und gleich wirkende Teile dieselben Bezugsziffern verwendet, wobei bisweilen Hochindizes ihre Anwendung finden.

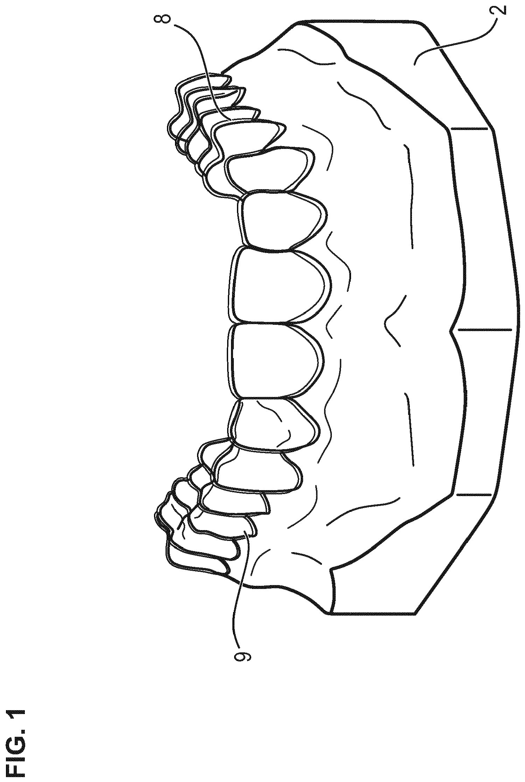

Fig. 1 zeigt eine formschlüssige Befestigungsschiene, insbesondere Miniplastschiene 8. Diese ist lösbar auf einem kieferorthopädischen Modell 2 angeordnet, das mittels kieferorthopädischem Abformens des zu korrigierenden Kiefers und gegebenenfalls des Gegenkiefers angefertigt und entsprechend präpariert wurde. An den Zähnen wurden in bekannter Art und Weise Unterschnitte 9 ausgebildet, die die Befestigungsschiene am Modell und später an den identisch ausgeformten Zähnen fixieren. Mittels des kieferorthopädischen Modells 2 wird die formschlüssige Miniplastschiene 8 hergestellt. Dies erfolgt durch Tiefziehen einer Folie aus einem elastischen Material, vorzugsweise Kunststoff, anschließendem Entformen und Ausschneiden der gewünschten Form und einem Beschleifen bzw. Glätten der Ränder und der Interdentalbereiche. Hier sind sämtliche aus dem Stand der Technik bekannte Verfahren zur Herstellung einer solchen Befestigungsschiene und insbesondere Miniplastschiene 8 anwendbar.

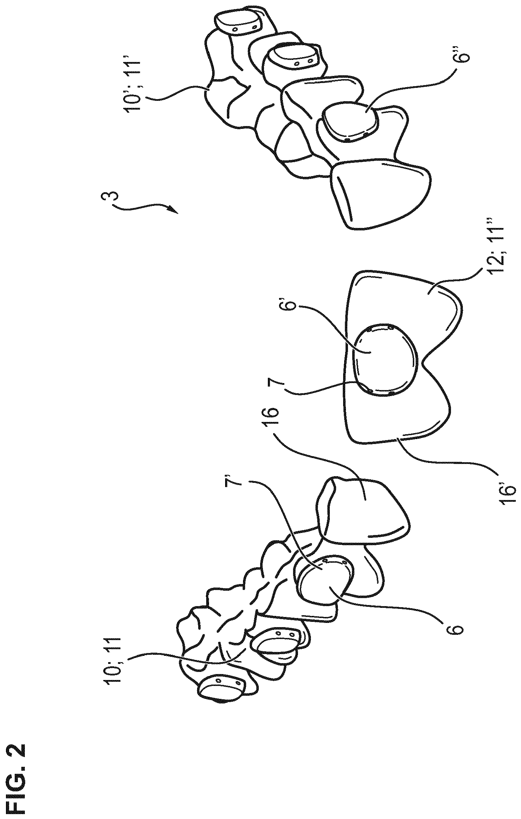

In Fig. 2 die nun den gewünschten Zahnbewegungen entsprechend segmentierte, formschlüssige Befestigungsschiene 8 gemäß Fig. 1 dargestellt. Zu sehen sind durch die Segmentierung resultierende zwei Lagerformschlusskappen 10, die meist über mehrere Zähne übergestülpt werden, und eine Kraftelementformschlusskappe 12, die über die Zähne überstülpbar ist, für die eine körperliche Zahnbewegung erzeugt werden soll. Vorzugsweise sind die Lagerformschlusskappen 10 so ausgebildet, dass sie über mehr Zähne stülpbar sind als die Kraftelementformschlusskappen 12. Diese als Formschlusskappen 11 ausgebildeten Befestigungselemente, insbesondere die zwei Lagerformschlusskappen 10 und die Kraftelementformschlusskappe 12, müssen nach der Segmentierung an den neu entstandenen Rändern 16 erneut bearbeitet, insbesondere abgeschliffen werden, um später Verletzungen im Mundraum zu vermeiden.

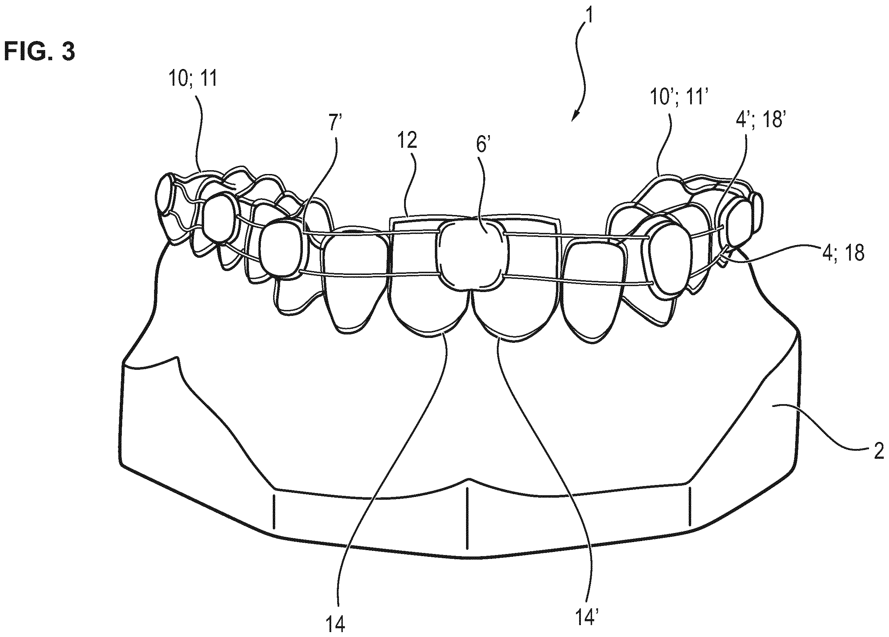

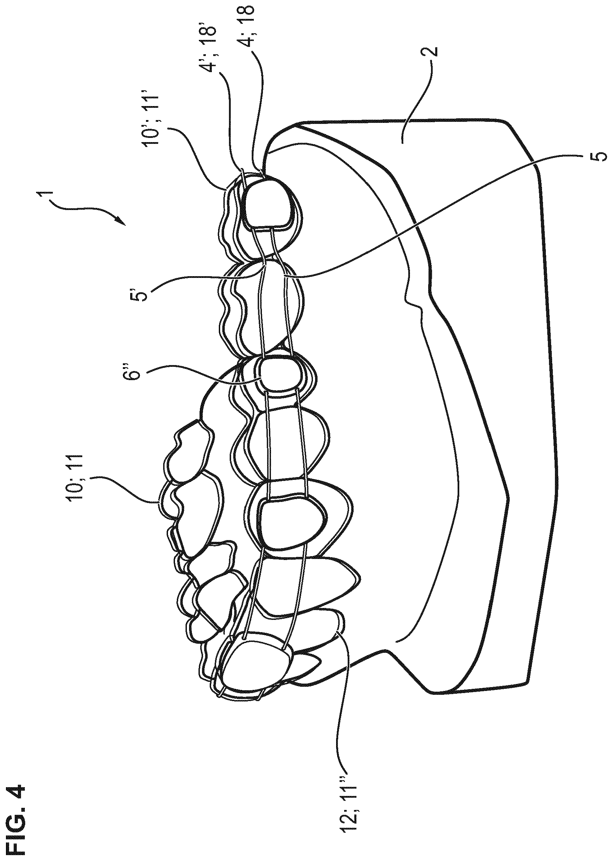

Die Zahnkorrektur soll hier für die mittleren Schneidezähne 14 (siehe Fig. 3) erfolgen. Die zur Aufnahme von Verbindungselementen und hier im speziellen Drahtbögen 4 (siehe Fig. 4) erforderlichen Montageelemente 6 sind bereits durch eine Klebeverbindung auf der segmentierten, formschlüssigen Miniplastschiene 8 aufgebracht. Die Montagelemente 6 weisen Aufnahmeelemente und insbesondere Öffnungen 7 auf, in die später die Verbindungselemente 4 einsetzbar sind.

Fig. 3 zeigt eine Vorrichtung 1 zur kieferorthopädischen Zahnkorrektur im gebrauchsfertigen Zustand unter Verwendung der Befestigungsschiene 8 gemäß Fig. 2 in einer Frontansicht auf dem kieferorthopädischen Modell 2 gemäß Fig. 1.

Die Verbindungselemente, insbesondere die zwei Drahtbögen 4, wirken hier als Kraftelemente 18. Die Drahtbögen 4 sind entsprechend der gewünschten Zahnkorrektur gebogen und in die Montageelemente 6 durch die Öffnungen 7 eingeführt, um so die Befestigungselemente bzw. die Formschlusskappen 11, hier insbesondere die zwei Lagerformschlusskappen 10 und die Kraftelementformschlusskappe 12, zu verbinden. Die Vorrichtung 1 schnappt über die Zähne auf dem kieferorthopädischen Modell 2 ein und wird durch die Unterschnitte 9 daran gehalten. Ähnlich erfolgt die Befestigung am Gebiss des Trägers.

Durch die in den elastischen Drahtbögen 4 wirkende Rückstellkraft werden auf die entsprechenden körperlich zu bewegenden Zähne Kräfte übertragen. Als Resultat wird durch die Krafteinwirkung der Umbau des Zahnfaches mit der gewünschten Zahnbewegung bewirkt.

In Fig. 4 ist die Vorrichtung 1 zur kieferorthopädischen Zahnkorrektur gemäß Fig. 3 in einer Seitenansicht auf dem kieferorthopädischen Modell 2 dargestellt. Hier ist die entsprechend benötigte Biegung 5 der zwei Drahtbögen 4 zu sehen, um die Korrektur der Position der mittleren Schneidezähne 14 zu erzeugen. Die Drahtbögen 4 sind durch die Öffnungen 7 in die Montageelemente 6 eingeführt. Die Vorrichtung 1 ist in einem gebrauchsfertigen Zustand.

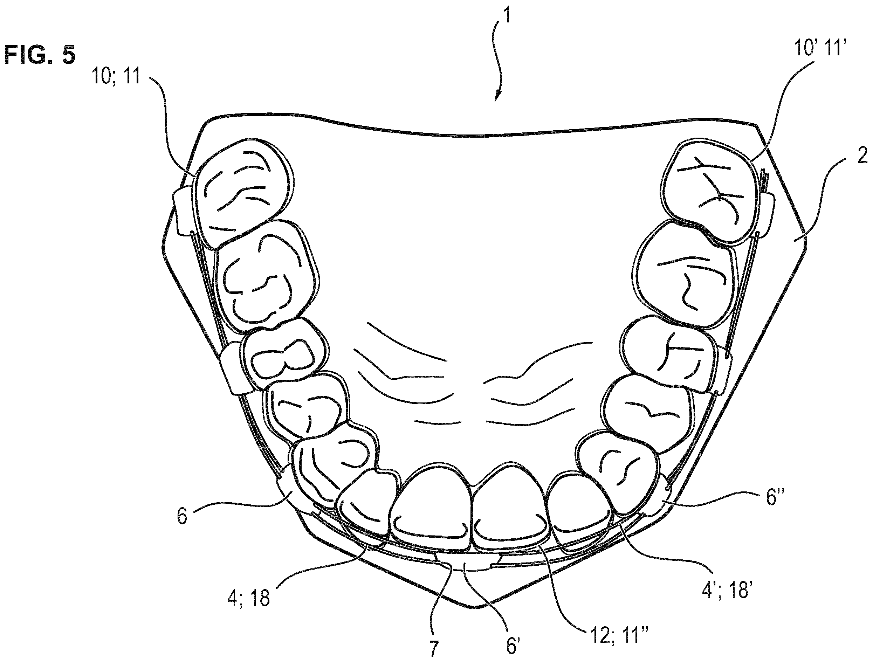

Fig. 5 zeigt die Vorrichtung 1 zur kieferorthopädischen Zahnkorrektur gemäß Fig. 4 in einer Draufsicht auf dem kieferorthopädischen Modell 2.

Die Drahtbögen 4 mit den Biegungen 5 (siehe Fig. 4) sind bereits in die Öffnungen 7 der Montageelemente 6 eingeführt. Die Vorrichtung 1 ist in einem gebrauchsfertigen Zustand.

Grundsätzlich ist es möglich zusätzlich oder anstelle der als Kraftelement 18 wirkenden Drahtbögen 14 weitere Kraftelemente anzuordnen, die eine Krafteinleitung an gewünschter Stelle ermöglichen. Hier können u.a. Stellelemente zwischen den Drahtbögen und den Befestigungselementen ihre Anwendung finde, die die Befestigungselemente relativ zu den Drahtbögen bewegen bzw. eine entsprechende Kraft einleiten.

### Bezugszeichenliste

- 1: Vorrichtung
- 2: Kieferorthopädisches Modell
- 3: Segmentierung
- 4: Verbindungselement bzw. Drahtbogen
- 5: Biegung
- 6: Montageelement
- 7: Öffnung
- 8: Befestigungsschiene bzw. Miniplastschiene
- 9: Unterschnitt
- 10: Lagerformschlusskappe
- 11: Befestigungselement bzw. Formschlusskappe
- 12: Kraftelementformschlusskappe
- 14: Zahn
- 16: Ränder
- 18: Kraftelement

## Patentansprüche

1. Vorrichtung zur kieferorthopädischen Zahnkorrektur, insbesondere zum Erzeugen einer körperlichen Zahnbewegung an wenigstens einem Zahn (14), aufweisend wenigstens ein Verbindungselement (4) zur kraftschlüssigen Verbindung wenigstens zweier Zähne (14), wobei das Verbindungselement (4) über Befestigungselemente (11) der Vorrichtung mit den wenigstens zwei Zähnen in Wirkverbindung bringbar ist, und aufweisend wenigstens ein Kraftelement (18), das mit dem Verbindungselement (4) in Wirkverbindung bringbar ist, zum Einwirken einer Positionierkraft auf den wenigstens einen zu bewegenden Zahn (14), wobei die Befestigungselemente (11) wenigstens teilweise als Formschlusskappe (11) ausgeführt sind, die kraftschlüssig über wenigstens einen Zahn (14) überstülpbar ist, **dadurch gekennzeichnet, dass** das Verbindungselement (4) mit dem Befestigungselement (11) über wenigstens ein Montageelement (6) verbindbar ist, so dass das wenigstens eine Verbindungselement (4) austauschbar und an unterschiedliche Zahnstellungen adaptierbar ist.

2. Vorrichtung nach Anspruch 1,
**dadurch gekennzeichnet, dass**
die Vorrichtung (1) lösbar mit den Zähnen (14) in Wirkverbindung bringbar ist.

3. Vorrichtung nach Anspruch 1 oder 2,
**dadurch gekennzeichnet, dass**
die Formschlusskappe (11) als Teil einer Segmentierung (3) einer formschlüssigen Befestigungs- oder Miniplastschiene (8) ausgebildet ist.

4. Vorrichtung nach einem der vorhergehenden Ansprüche,
**dadurch gekennzeichnet, dass**
wenigstens zwei Formschlusskappen (11) vorgesehen sind, wobei wenigstens eine Formschlusskappe (11) als Lagerformschlusskappe (10) und wenigstens eine weitere Formschlusskappe (11) als Kraftelementformschlusskappe (12) zur Erzeugung der körperlichen Zahnbewegung des zu bewegenden wenigstens einen Zahns (14) ausgebildet ist.

5. Vorrichtung nach einem der vorhergehenden Ansprüche, insbesondere Anspruch 4,
**dadurch gekennzeichnet, dass**
die Lagerformschlusskappe (10) derart ausgebildet ist, dass sie über wenigstens zwei Zähne (14) und insbesondere über mehr Zähne überstülpbar ist als die Kraftelementformschlusskappe (12).

6. Vorrichtung nach einem der vorhergehenden Ansprüche,
**dadurch gekennzeichnet, dass**
das Verbindungselement (4) als Kraftelement (18) und derart vorspannbar ausgebildet ist, um über die Befestigungselemente (11) eine Rückstellkraft auf den wenigstens einen körperlich zu bewegenden Zahn (14) zu übertragen.

7. Vorrichtung nach einem der vorhergehenden Ansprüche,
**dadurch gekennzeichnet, dass**
das Verbindungselement als Drahtelement (4) oder ein dergleichen elastisch verformbares Element ausgebildet ist.

8. Vorrichtung nach einem der vorhergehenden Ansprüche,
**dadurch gekennzeichnet, dass**
das Kraftelement (18) wenigstens ein Stellelement, insbesondere ein Schraubelement, umfasst, wobei das Stellelement eine Anpassung der wenigstens in den körperlich zu bewegenden Zahn (14) einzuleitenden Kraft ermöglicht.

9. Verfahren zur Herstellung einer Vorrichtung (1) zur kieferorthopädischen Zahnkorrektur gemäß Anspruch 1, insbesondere zum Erzeugen einer körperlichen Zahnbewegung an wenigstens einem Zahn (14),
**gekennzeichnet durch** folgende Verfahrensschritte:
- Herstellen einer formschlüssigen, von den Zähnen lösbar ausgebildeten Befestigungsschiene, insbesondere Miniplastschiene (8), die über die Zähne überstülpar ausgebildet ist,
- Segmentieren der Befestigungsschiene (8), sodass sich wenigstens eine Lagerformschlusskappe (10) und wenigstens eine zu bewegende Kraftelementformschlusskappe (12) ergeben,
- Aufbringen je wenigstens eines Montageelements (6) auf die Lagerformschlusskappe (10) und die Kraftelementformschlusskappe (12);
- kraftschlüssiges Verbinden der Lagerformschlusskappe (10) und der Kraftelementformschlusskappe (12) mittels wenigstens eines Verbindungselementes (4) über die Montageelemente (6), und
- Anordnen wenigstens eines Kraftelementes (18) derart, dass dieses wenigstens mit der Kraftelementformschlusskappe (12) in Wirkverbindung steht oder bringbar ist, um eine Positionierkraft in die Kraftelementformschlusskappe (12) einzuleiten.

## Claims

1. A device for orthodontic dental correction, in particular for producing physical tooth movement at least at one tooth (14), comprising at least one connecting element (4) for frictionally connecting at least two teeth (14), wherein the connecting element (4) can bring the device into operative connection with the at least two teeth by means of fixing elements (11), and comprising at least one force element (18) able to be brought into operative connection with the connecting element (4) to exert a positioning force on the at least one tooth (14) to be moved,
wherein the fixing elements are at least partially implemented as a form-fitting cap (11) able to be frictionally forced over at least one tooth (14),
**characterized in that**
the connecting element (4) is connectable to the fixing element (11) by means of at least one mounting element (6) so that the at least one connecting element (4) is replaceable and can be adapted to different positions of the teeth.

2. The device according to claim 1,
**characterized in that**
the device (1) can be brought into detachable operative connection with the teeth (14).

3. The device according to claim 1 or 2,
**characterized in that**
the form-fitting cap (11) is designed as part of a segmentation (3) of a form-fitting retaining or miniplast splint (8).

4. The device according to one of the preceding claims,
**characterized in that**
at least two form-fitting caps (11) are provided, wherein at least one form-fitting cap (11) is designed as a bearing form-fitting cap (10) and at least one further form-fitting cap (11) as a force member form-fitting cap (12) for producing the physical tooth movement of the at least one tooth (14) to be moved.

5. The device according to one of the preceding claims, in particular claim 4,
**characterized in that**
the bearing form-fitting cap (10) is designed such that it can be forced over at least two teeth (14) and in particular over more teeth than the force member form-fitting cap (12).

6. The device according to one of the preceding claims,
**characterized in that**
the connecting element (4) is designed as a force element (18) and able to be pretensioned so as to convey a restoring force on the at least one tooth (14) to be physically moved by way of the fixing elements (11).

7. The device according to one of the preceding claims,
**characterized in that**
the connecting element is designed as a wire element (4) or similar elastically deformable element.

8. The device according to one of the preceding claims,
**characterized in that**
the force element (18) comprises at least one positioning element, in particular a screw element, wherein the positioning element enables adjusting of the force to be introduced at least into the tooth (14) to be physically moved.

9. A method for producing a device (1) for orthodontic dental correction according to claim 1, in particular for producing physical tooth movement at least at one tooth (14),
**characterized by** the following method steps:
- producing a form-fitting retaining splint, in particular a miniplast splint (8), designed to be detachable from the teeth and able to be forced over the teeth,
- segmenting the retaining splint (8) so as to result in at least one bearing form-fitting cap (10) and at least one movable force member form-fitting cap (12),
- placing at least one respective mounting element (6) on the bearing form-fitting cap (10) and on the force member form-fitting cap (12);
- frictionally connecting the bearing form-fitting cap (10) and the force member form-fitting cap (12) by means of at least one connecting element (4) via the mounting element (6), and
- arranging at least one force element (18) in such a manner as to be in or be able to be brought into operative connection at least with the force member form-fitting cap (12) in order to introduce a positioning force into the force member form-fitting cap (12).

## Revendications

1. Dispositif de correction dentaire orthodontique, en particulier pour générer un mouvement dentaire physique sur au moins une dent (14), comprenant au moins un élément de liaison (4) pour la liaison en coopération de forces d'au moins deux dents (14), l'élément de liaison (4) pouvant être mis en liaison active avec lesdites moins deux dents par des éléments de fixation (11) du dispositif, et comprenant au moins un élément d'application de force (18) qui peut être mis en liaison active avec l'élément de liaison (4) pour appliquer une force de positionnement sur ladite au moins une dent (14) à mouvoir,
dans lequel
les éléments de fixation (11) sont réalisés au moins partiellement en tant que calotte de forme adaptée (11) qui peut être coiffée par coopération de forces par-dessus au moins une dent,
**caractérisé en ce que** l'élément de liaison (4) peut être relié à l'élément de fixation (11) par au moins un élément de montage (6), de sorte que ledit au moins un élément de liaison (4) est interchangeable et adaptable à différentes positions des dents.

2. Dispositif selon la revendication 1,
**caractérisé en ce que**
le dispositif (1) peut être mis en liaison active avec les dents (14) de façon détachable.

3. Dispositif selon la revendication 1 ou 2,
**caractérisé en ce que**
la calotte de forme adaptée (11) est réalisée en tant que partie d'une segmentation (3) d'une tringle de fixation ou d'une gouttière miniplast (8).

4. Dispositif selon l'une des revendications précédentes,
**caractérisé en ce que**
il est prévu au moins deux calottes de forme adaptée (11), au moins une calotte de forme adaptée (11) étant réalisée en tant que calotte de forme adaptée (10) de support et au moins une autre calotte de forme adaptée étant réalisée en tant que calotte de forme adaptée (12) d'élément d'application de force pour générer un mouvement dentaire physique de ladite au moins une dent (14) à mouvoir.

5. Dispositif selon l'une des revendications précédentes, en particulier selon la revendication 4,
**caractérisé en ce que**
la calotte de forme adaptée (11) de support est réalisée de manière à pouvoir être coiffée par-dessus au moins deux dentes (14) et en particulier par-dessus plus de dents que la calotte de forme adaptée (12) d'élément d'application de force.

6. Dispositif selon l'une des revendications précédentes,
**caractérisé en ce que**
l'élément de liaison (4) est réalisé sous forme d'élément d'application de force (18) et de manière à pouvoir être précontraint pour transmettre une force de rappel à ladite au moins une dent (14) à mouvoir physiquement via les éléments de fixation (11).

7. Dispositif selon l'une des revendications précédentes,
**caractérisé en ce que**
l'élément de liaison est réalisé sous forme d'élément en fil (4) ou d'élément élastiquement déformable similaire.

8. Dispositif selon l'une des revendications précédentes,
**caractérisé en ce que**
l'élément d'application de force (18) comprend au moins un élément de réglage, en particulier un élément de vissage, l'élément de réglage permettant une adaptation de la force à appliquer au moins dans la dent (14) à mouvoir physiquement.

9. Procédé pour réaliser un dispositif (1) de correction dentaire orthodontique selon la revendication 1, en particulier pour générer un mouvement dentaire physique sur au moins une dent (14), **caractérisé par** les étapes suivantes consistant à :
- réaliser une tringle de fixation, en particulier une gouttière miniplast (8) en coopération de formes, réalisée en particulier de façon détachable des dents, et réalisée de manière à pouvoir être coiffée par-dessus les dents,
- segmenter la tringle de fixation (8) de manière à obtenir au moins une calotte de forme adaptée (10) de support et au moins une calotte de forme adaptée (12) d'élément d'application de force à mouvoir,
- placer au moins un élément de montage respectif (6) sur ladite calotte de forme adaptée (10) de support et sur la calotte de forme adaptée (12) d'élément d'application de force ;
- relier par coopération de forces la calotte de forme adaptée (10) de support et la calotte de forme adaptée (12) d'élément d'application de force par au moins un élément de liaison (4) via les éléments de montage (6) ; et
- agencer au moins un élément d'application de force (18) de telle sorte que celui-ci est ou peut être mis en liaison active au moins avec la calotte de forme adaptée (12) d'élément d'application de force, afin d'appliquer une force de positionnement dans la calotte de forme adaptée (12) d'élément d'application de force.
